# EUROPEAN PATENT SPECIFICATION

(11) **EP 2 384 930 B1**
(45) Date of publication and mention of the grant of the patent: **04.10.2017**
(21) Application number: 10161940.1
(22) Date of filing: 05.05.2010
(51) Int. Cl.: B60Q 1/08

(54) **Headlight steering by monitoring driver's eyes**
Scheinwerferlenkung mittels Überwachung der Fahreraugen
Orientation des phares en surveillant les yeux du conducteur

(43) Date of publication of application: 09.11.2011
(73) Proprietor: Volvo Car Corporation, 405 31 Göteborg (SE)
(72) Inventor: Brandin, Magnus, 43734, Lindome (SE); Levin, Daniel, 41481, Göteborg (SE)
(74) Representative: Volvo Car Corporation

(56) References cited:
- DE-A1-102005 036 002
- JP-A- 9 076 815
- US-A- 5 931 572
- US-A1- 2005 275 562
- US-A1- 2009 016 073

## Description

### Technical field

The present invention relates to a motor vehicle headlight direction system, in accordance with the preamble of claim 1. The present invention also relates to a method for directing one or more vehicle headlights, in accordance with the preamble of claim 6.

### Background of the invention

When driving a vehicle in dark road conditions, where there is a risk of colliding with wild animals, humans etc., the headlight beam will normally give poor support in lateral directions. For example, when the forest lines up next to the edge of the road, the forward head light beams of the vehicle will normally provide poor illumination in the lateral directions, such that it may become very difficult for a driver of the vehicle to discover a potential threat, such as e.g. a wild animal close to the side of the road.

Hitherto, various devices for changing lighting regions of vehicles headlights towards right and left have been proposed. Almost all of the proposed devices change the lighting regions in accordance with a steering angle of a steering wheel of an associated vehicle. According to the devices, the lighting regions of the headlights are changed toward a direction of steering to increase lighting of the direction in which a vehicle is just about to advance. However, although the previously known devices provides increased illumination in lateral directions when travelling through a curve or when turning in a crossing, potential threats when travelling in a straight or nearly straight line remain difficult to discover.

DE102005036002 discloses a method for controlling a lighting device of a vehicle. A viewing direction is detected from a vehicle driver and, depending on the detected information on the viewing direction, at least one parameter of at least one adjustable headlamp of the lighting device is set. D1 further discloses a headlight system as above and processing means for carrying out the above method.

### Summary of the invention

Thus, it is an object of the invention is to provide a system which improves a vehicle driver's ability to detect potential threats close to the side of the road, especially when driving in dark, dawn or dusky conditions.

This object is achieved by means of a motor vehicle headlight direction system having the characteristics of claim 1.

Thanks to the provision of at least one sensor, arranged to monitor at least one eye of a driver of said vehicle; a logic, arranged to process information acquired by said at least one sensor; and at least one actuator, arranged to direct at least one headlight of said vehicle based on said processed information, a driver of an associated vehicle will be able to detect potential threats close to the side of the road when driving in dark, dawn or dusky conditions through the ability to steer the headlight beams in a direction of interest as indicated by a viewing direction of the driver.

A further object of the present invention is to provide a method which improves a vehicle driver's ability to detect potential threats close to the side of the road, especially when driving in dark, dawn or dusky conditions.

This object is achieved by means of a method for directing one or more vehicle headlights having the characteristics of claim 6.

Thanks to the method comprising the steps of: arranging at least one sensor to monitor at least one eye of a driver of a vehicle, information on a viewing angle and/ or angular velocity in both pitch and yaw directions of said at least one eye, relative to a coordinate system which is fixed to said vehicle, and signal quality information and detection confidence for each respective eye of said driver individually; arranging a logic to process information acquired by said at least one sensor and filter out the viewing angle and/or angular velocity of the eye having the highest quality or of a combination of data for both right and left eyes, based on the signal quality information and detection confidence from the at least one sensor; and arranging at least one actuator to direct at least one headlight of said vehicle based on said processed information, a driver of an associated vehicle will be able to detect potential threats close to the side of the road when driving in dark, dawn or dusky conditions through the ability to steer the headlight beams in a direction of interest as indicated by a viewing direction of the driver.

Preferred embodiments are listed in the dependent claims.

### Description of drawings

In the following, the invention will be described in greater detail by way of example only with reference to attached drawings, in which
Fig. 1 shows schematically a system overview for headlight steering by monitoring of human eyes in accordance with the present invention;
Fig. 2 illustrates schematically an output signal from the headlight logic in accordance with the present invention;
Fig. 3 illustrates schematically one example of the hysteresis logic in the headlight logic in accordance with the present invention;
Fig. 4 illustrates how the headlights of a vehicle are controlled in a direction determined by the viewing direction of the driver thereof in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

In overview, the present invention relates to directional steering of the headlight beams 1, 2 of a vehicle 3, such as a car, by monitoring the eyes of the driver 4 of the vehicle 3 and steering the headlight beams 1, 2 in a direction essentially corresponding to the viewing direction of the driver 4.

In accordance with the present invention is provided a motor vehicle headlight direction system. The system comprises at least one sensor 100, which is arranged to monitor viewing related information from at least one eye of a driver 4 of the vehicle 3. Further, the system comprises a logic 101, 102, arranged to process viewing related information acquired by the at least one sensor 100. Additionally, the system comprises at least one actuator (not shown), which is arranged to direct at least one headlight beam 1 or 2 of the vehicle 3 based on said processed viewing related information.

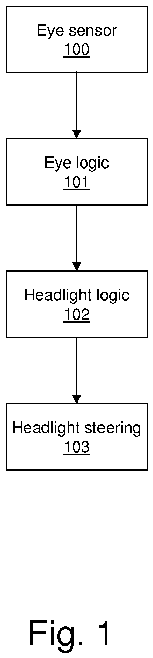

In figure 1 is shown schematically a system overview for headlight steering by monitoring of human eyes in accordance with the present invention. In one embodiment, as illustrated in figure 1, the system may be divided into a number of functional blocks.

An eye sensor block 100 is arranged to monitor at least one, but preferably both, eyes of the driver 4. One or more eye sensors 100 are arranged to acquire and provide information about the eyes' angles and/or angular velocity in both pitch and yaw directions, relative to a fixed coordinate system. This fixed coordinate system is referenced, i.e. fixed, to the vehicle 3, not the head of the person 4 the eyes of whom are monitored.

An eye sensor logic associated with the one or more eye sensors 100 is arranged to provide quality information and detection confidence for each respective eye, i.e. left and right eye, of the driver individually. Thus, the system provides a possibility to use information from the eye which provides best confidence information, or a combination of data for both left and right eyes.

The eye sensor 100 is preferably a camera, such as a CCD camera, having the associated above mentioned eye sensor logic, where the logic is arranged to handle both left and right side angles, and height angles above and below the horizon. Through using information acquired from both eyes of the monitored driver 4, it is possible to select the best quality information, or a combination of data for both left and right eyes. The logic of the camera sensor 100 may in alternative embodiments be arranged in the eye sensor block 100 or in the eye logic block 101, or alternatively distributed there between.

The camera sensor 100 preferably also comprises means (not shown) for illuminating the eyes of the driver 4 that are to be monitored using infra red (IR) light. Thus it becomes possible to detect eye movement of the driver 4 also in dark conditions, which of course are the most relevant conditions for using the headlights of the vehicle 3.

The system further comprises a logic which, as illustrated in figure 1, may be divided into an eye logic block 101 and a headlight logic block 102 or in alternative embodiments arranged as one or more blocks providing partial logic functionalities.

The eye logic block 101 in figure 1 is arranged to filter out the eye angles and/or angular velocity having the highest quality. This logic is based on the signal quality information and detection confidence from at least one sensor of the eye sensor block 100. The output from the eye logic block 101 is the eye angles and/or angular velocity (left or right eye) with the highest quality and eye detection confidence, or a combination of data for both left and right eyes. The eye logic block 101 handles both left and right side angles, and height angles above and below the horizon.

The headlight logic block 102 in figure 1 includes logic for outputting static angular values to at least one actuator (not shown) of a headlight steering block 103. The purpose of the headlight logic block 102 is to apply stability to the output angle signals for giving the control of the headlights steering a harmonic and correct behavior.

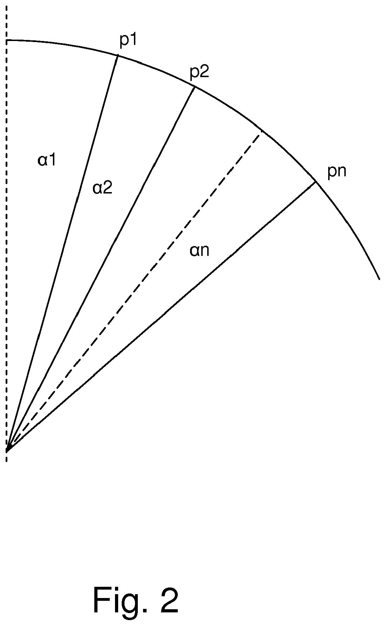

The output angles are divided into *n* number of fixed angles, see figure 2. The fixed angles are not dependent of equal angle steps and the number of steps is not fixed. The number of angle steps and the size of the angle steps are optimized according to the installation of the system and system performance.

The headlight logic 102 block will first apply low pass filtering of the input eye signals, i.e. the information acquired by the at least one eye sensor in eye sensor block 100. Low-pass filtering is used to eliminate rapid eye movement signals, which may otherwise cause an instable oscillating behavior. After filtering, the headlight logic 102 applies a hysteresis on the output headlight steering signals, as described below. The hysteresis is applied in order to avoid oscillation between two headlight direction angles if the output headlight steering signals should oscillate between values.

Below, the hysteresis logic for headlight steering with *p1* and *p2* output signals are described. The hysteresis logic describes only one side of the headlight steering area, but the hysteresis logic is analogous in both directions, but not necessarily symmetric in values, which values may be specific for each respective angle. The logic handles both left and right hand side angles, and height angles above and below the horizon.

The hysteresis is important in order to avoid alternating between two angles if the output from the eye logic block 101 alternates between values.

Figure 2 shows the output signal from the headlight logic block 102 in figure 1, i.e. the static angles for the headlight. The output signal contains static angles *p1*, *p2* to *pn,* and the signal is connected to actuators for controlling the steerable headlights. The figure may be seen to illustrate both output side angles and height angles. Further, the angular partition *α1* does not have to be the same as the angular partition *α2*. The figure shows only positive angles for height and side angles, but the logic handles right and left angles similarly. This is also the case for height angles above and below the horizon.

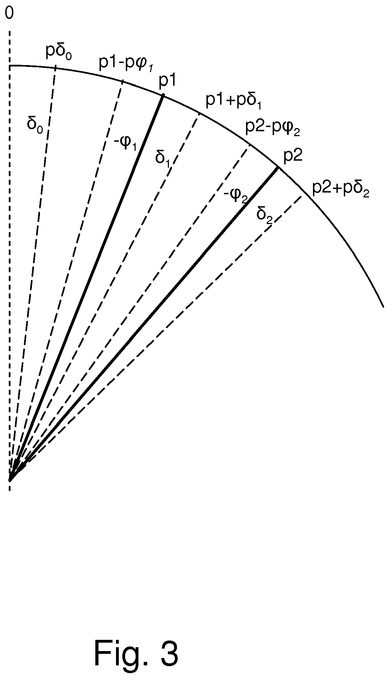

Figure 3 shows one example of the hysteresis logic for the two fixed headlight angles, *p1* and *p2* of figure 2. As can be seen the hysteresis logic is arranged to take into account a span, *(-pϕᵢ, +p δⱼ*) around a detected viewing angle when determining if the at least one headlight should be redirected. The angles *ϕᵢ* and *δⱼ* do not have to be fixed (linearly spaced) but may provide different width of the hysteresis. It is preferred that the hysteresis limits are set dynamically.

Below is an example, with reference to figure 3, of how the headlight positions could be calculated:

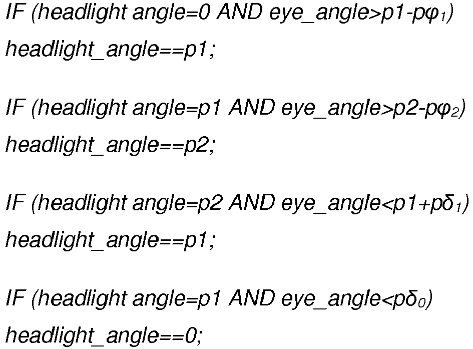

And so on in an analogous manner for angles
*p0, p1, p2, p3...pn,* and
*ϕ₀, ϕ₁, ϕ₂, ϕ₃,... ϕᵢ,* where *i= 1, 2, 3...n,* and
*δ₀, δ₁, δ₂, δ₃,... δⱼ*, where *j= 1, 2, 3...n.*

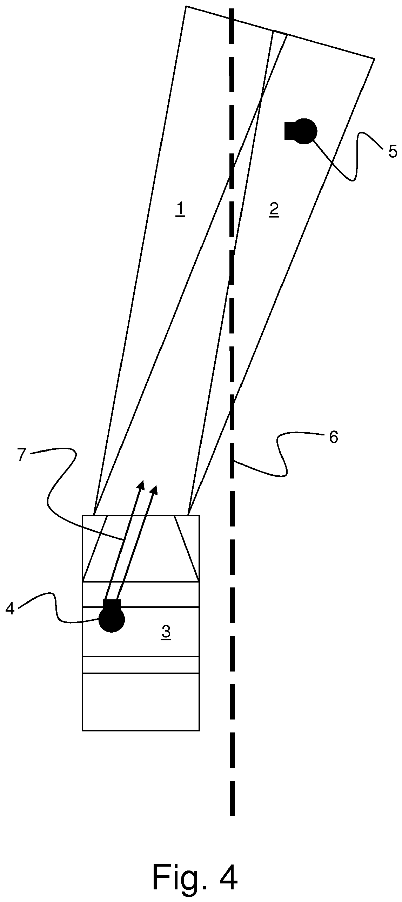

Finally, in a headlight steering block 103 the input steering angles from the headlight logic 102 will be executed and the headlight or headlights will be positioned according to the input angle request e.g. using actuators for adjusting both left and right side angles, and height angles above and below the horizon. The headlight steering block 103 also contains logic for determining how many of a number of available headlight sources that shall be controlled. Figure 4 illustrates how the headlights of a vehicle 3 are controlled, by a motor vehicle headlight direction system in accordance with the present invention, in a direction determined by the viewing direction 7 of the driver 4 of the vehicle 3. The vehicle 3 is driven by a driver 4 who scans an area in front of the vehicle using his or her eyesight. At least one sensor is placed within the vehicle 3, such as in the vicinity of an upper end or lower end of a windshield in front of a driver's seat, and arranged to monitor at least one eye of the driver 4 of the vehicle 3. A logic 101, 102 which is part of the system is arranged to process information acquired by the at least one sensor. At least one actuator is associated with each steerable headlight of the vehicle and arranged to direct the at least one headlight of the vehicle based on said processed information, thus enabling the driver 4 of the associated vehicle 3 to be able to detect a potential threat 5 close to the side of the road 6 when driving in dark, dawn or dusky conditions. This is enabled through the ability to steer the headlight beams 1, 2 in a direction of interest as indicated by a viewing direction of the driver 4.

The present invention also relates to a motor vehicle 3, which comprises a motor vehicle headlight direction system as described above.

The present invention further relates to a method for directing one or more vehicle headlights of a motor vehicle 3, which comprises the steps of: arranging at least one sensor 100 to acquire viewing related information from at least one eye of a driver 4 of a vehicle 3; arranging a logic 101, 102 to process information acquired by the at least one sensor 100; arranging at least one actuator to direct at least one headlight of the vehicle 3 based on said processed information.

It is of course envisaged that the above invention be implemented such that any applicable legal requirements are fulfilled.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. Motor vehicle (3) headlight direction system comprising:
at least one sensor (100), arranged to acquire viewing related information from at least one eye of a driver (4) of said vehicle (3);
a logic (101, 102), arranged to process information acquired by said at least one sensor (100);
at least one actuator, arranged to direct at least one headlight of said vehicle (3) based on said processed information, **characterized in that**:
said at least one sensor (100) is arranged to acquire information on a viewing angle and/or angular velocity in both pitch and yaw directions of said at least one eye, relative to a coordinate system which is fixed to said vehicle (3);
the at least one sensor (100) further is arranged to provide signal quality information and detection confidence for each respective eye of said driver (4) individually; and
that said logic (101, 102) is arranged to filter out the viewing angle and/or angular velocity of the eye having the highest quality or of a combination of data for both right and left eyes, based on the signal quality information and detection confidence from the at least one sensor (100).

2. Motor vehicle (3) headlight direction system according to claim 1, **characterized in that** said logic (101, 102) further is arranged to output static angular values to said at least one actuator, where the output angles are divided into *n* number of fixed angles.

3. Motor vehicle (3) headlight direction system according to any one of claims 1 to 2, **characterized in that** said logic (101, 102) is arranged to first apply low pass filtering to the information acquired by said at least one sensor (101), to remove rapid eye movement signals, and thereafter to apply a hysteresis on said processed information, to avoid oscillation between two headlight direction angles if said processed information oscillates between values.

4. Motor vehicle (3) headlight direction system according to any one of claims 1 to 3, **characterized in that** said logic (101, 102) is arranged to take into account a span (*+pδⱼ, -pϕᵢ*) around a detected viewing angle when determining if said at least one headlight should be redirected.

5. A motor vehicle (3), **characterized in that** it comprises a motor vehicle (3) headlight direction system according to any one of claims 1 to 4.

6. Method for directing one or more headlights of a motor vehicle (3), **characterized in that** it comprises the steps of:
arranging at least one sensor (100) to acquire viewing related information from at least one eye of a driver (4) of a vehicle (3), information on a viewing angle and/or angular velocity in both pitch and yaw directions of said at least one eye, relative to a coordinate system which is fixed to said vehicle (3), and signal quality information and detection confidence for each respective eye of said driver (4) individually;
arranging a logic (101, 102) to process information acquired by said at least one sensor (100) and filter out the viewing angle and/or angular velocity of the eye having the highest quality or of a combination of data for both right and left eyes, based on the signal quality information and detection confidence from the at least one sensor (100);
arranging at least one actuator to direct at least one headlight of said vehicle (3) based on said processed information.

## Patentansprüche

1. Schweinwerferrichtungssystem eines Kraftfahrzeugs (3), das Folgendes umfasst:
mindestens einen Sensor (100), der ausgelegt ist zum Erfassen blickbezogener Informationen von mindestens einem Auge eines Fahrers (4) des Fahrzeugs (3);
eine Logik (101, 102), die ausgelegt ist zum Verarbeiten von Informationen, die von dem mindestens einen Sensor (100) erfasst wurden;
mindestens einen Aktor, der ausgelegt ist zum Richten mindestens eines Schweinwerfers des Fahrzeugs (3), basierend auf den verarbeiteten Informationen, **dadurch gekennzeichnet, dass**:
der mindestens eine Sensor (100) ausgelegt ist zum Erfassen von Informationen über einen Blickwinkel und/oder eine Winkelgeschwindigkeit von sowohl Neigeals auch Gierrichtungen des mindestens einen Auges relativ zu einem Koordinatensystem, das fest zum Fahrzeug (3) steht;
der mindestens eine Sensor (100) ferner ausgelegt ist zum individuellen Liefern von Signalqualitätsinformationen und Detektionsvertrauen für jeweils ein Auge des Fahrers (4); und
dass die Logik (101, 102) ausgelegt ist zum Ausfiltern des Blickwinkels und/oder der Winkelgeschwindigkeit des Auges mit der höchsten Qualität oder einer Kombination von Daten für sowohl das rechte als auch das linke Auge, basierend auf den Signalqualitätsinformationen und dem Detektionsvertrauen vom mindestens einen Sensor (100).

2. Schweinwerferrichtungssystem eines Kraftfahrzeugs (3), **dadurch gekennzeichnet, dass** die Logik (101, 102) ferner ausgelegt ist zum Ausgeben statischer Winkelwerte an den mindestens einen Aktor, wobei die Ausgabewinkel in eine Anzahl n von festen Winkeln geteilt sind.

3. Schweinwerferrichtungssystem eines Kraftfahrzeugs (3) nach einem der Ansprüche 1 bis 2, **dadurch gekennzeichnet, dass** die Logik (101, 102) ferner ausgelegt ist zum Anwenden von zunächst Tiefpassfilterung auf die Informationen, die von dem mindestens einen Sensor (101) erfasst wurden, um Signale schneller Augenbewegung zu entfernen und danach eine Hysterese auf die verarbeiteten Informationen anzuwenden, um Oszillation zwischen zwei Schweinwerferrichtungswinkeln zu vermeiden, falls die verarbeiteten Informationen zwischen Werten oszillieren.

4. Schweinwerferrichtungssystem eines Kraftfahrzeugs (3) nach einem der Ansprüche 1 bis 3, **dadurch gekennzeichnet, dass** die Logik (101, 102) ferner ausgelegt ist zum Berücksichtigen einer Spanne (+pσⱼ, -pϕᵢ) um einen detektierten Blickwinkel herum, wenn bestimmt wird, ob der mindestens eine Scheinwerfer umgerichtet werden sollte.

5. Kraftfahrzeug (3), **dadurch gekennzeichnet, dass** es ein Schweinwerferrichtungssystem eines Kraftfahrzeugs (3) nach einem der Ansprüche 1 bis 4 umfasst.

6. Verfahren zum Richten eines oder mehrerer Scheinwerfer eines Kraftfahrzeugs (3), **dadurch gekennzeichnet, dass** es die folgenden Schritte umfasst:
Auslegen von mindestens einem Sensor (100) zum Erfassen blickbezogener Informationen von mindestens einem Auge eines Fahrers (4) eines Fahrzeugs (3), von Informationen über einen Blickwinkel und/oder eine Winkelgeschwindigkeit von sowohl Neige- als auch Gierrichtungen des mindestens einen Auges relativ zu einem Koordinatensystem, das fest zum Fahrzeug (3) steht, und von individuellen Signalqualitätsinformationen und Detektionsvertrauen für jeweils ein Auge des Fahrers (4);
Auslegen einer Logik (101, 102) zum Verarbeiten von Informationen, die von dem mindestens einen Sensor (100) erfasst wurden, und zum Ausfiltern des Blickwinkels und/oder der Winkelgeschwindigkeit des Auges mit der höchsten Qualität oder einer Kombination von Daten für sowohl das rechte als auch das linke Auge, basierend auf den Signalqualitätsinformationen und dem Detektionsvertrauen vom mindestens einen Sensor (100);
Auslegen mindestens eines Aktors zum Richten mindestens eines Scheinwerfers des Fahrzeugs (3), basierend auf den verarbeiteten Informationen.

## Revendications

1. Système d'orientation de phares de véhicule automobile (3) comprenant :
au moins un capteur (100), agencé de façon à acquérir des informations liées à la vision à partir d'au moins un oeil d'un conducteur (4) dudit véhicule (3) ;
une logique (101, 102) agencée de façon à traiter les informations acquises par ledit au moins un capteur (100) ;
au moins un actionneur, agencé de façon à orienter au moins un phare dudit véhicule (3) en se basant sur lesdites informations traitées, **caractérisé en ce que :**
ledit au moins un capteur (100) est agencé de façon à acquérir des informations sur un angle de vision et/ou sur une vitesse angulaire à la fois dans les directions de tangage et de lacet dudit au moins un oeil, par rapport à un système de coordonnées qui est fixé audit véhicule (3) ;
l'au moins un capteur (100) est agencé en outre de façon à fournir des informations sur la qualité du signal et une confiance de détection pour chaque oeil respectif dudit conducteur (4) individuellement ;
et **en ce que** ladite logique (101, 102) est agencée de façon à obtenir par filtrage l'angle de vision et/ou la vitesse angulaire de l'oeil ayant la plus haute qualité ou d'une combinaison de données pour à la fois l'oeil droit et l'oeil gauche, en se basant sur les informations sur la qualité du signal et sur la confiance de détection provenant de l'au moins un capteur (100).

2. Système d'orientation de phares de véhicule automobile (3) selon la revendication 1, **caractérisé en ce que** ladite logique (101, 102) est agencée en outre de façon à fournir des valeurs angulaires statiques audit au moins un actionneur, les angles fournis étant divisés en n nombre d'angles fixes.

3. Système d'orientation de phares de véhicule automobile (3) selon l'une quelconque des revendications 1 à 2, **caractérisé en ce que** ladite logique (101, 102) est agencée de façon à appliquer tout d'abord un filtrage passe-bas aux informations acquises par ledit au moins un capteur (101), de façon à enlever les signaux des mouvements oculaires rapides, et à appliquer ensuite une hystérésis sur lesdites informations traitées, de façon à éviter l'oscillation entre deux angles d'orientation de phare si lesdites informations traitées oscillent entre des valeurs.

4. Système d'orientation de phares de véhicule automobile (3) selon l'une quelconque des revendications 1 à 3, **caractérisé en ce que** ladite logique (101, 102) est agencée de façon à tenir compte d'une plage ( ) autour d'un angle de vision détecté lorsqu'elle détermine si ledit au moins un phare devrait être réorienté.

5. Véhicule automobile (3), **caractérisé en ce qu'**il comprend un système d'orientation de phares de véhicule automobile (3) selon l'une quelconque des revendications 1 à 4.

6. Procédé pour orienter un ou plusieurs phares d'un véhicule automobile (3), **caractérisé en ce qu'**il comprend les étapes consistant à :
agencer au moins un capteur (100) de façon à acquérir des informations liées à la vision à partir d'au moins un oeil d'un conducteur (4) d'un véhicule (3), des informations sur un angle de vision et/ou sur une vitesse angulaire à la fois dans les directions de tangage et de lacet dudit au moins un oeil, par rapport à un système de coordonnées qui est fixé audit véhicule (3), et des informations sur la qualité du signal et une confiance de détection pour chaque oeil respectif dudit conducteur (4) individuellement ;
agencer une logique (101, 102) de façon à traiter les informations acquises par ledit au moins un capteur (100) et à obtenir par filtrage l'angle de vision et/ou la vitesse angulaire de l'oeil ayant la plus haute qualité ou d'une combinaison de données pour à la fois l'oeil droit et l'oeil gauche, en se basant sur les informations sur la qualité du signal et sur la confiance de détection provenant de l'au moins un capteur (100) ;
agencer au moins un actionneur de façon à orienter au moins un phare dudit véhicule (3) en se basant sur lesdites informations traitées.
